# EUROPEAN PATENT APPLICATION

(11) **EP 2 530 392 A1**
(43) Date of publication of application: **05.12.2012**
(21) Application number: 10843893.8
(22) Date of filing: 25.01.2010
(51) Int. Cl.: F24F 7/08

(54) **VENTILATION TERMINAL DEVICE AND VENTILATION SYSTEM**

(71) Applicant: Mitsubishi Electric Corporation, Tokyo 100-8310 (JP)
(72) Inventor: SUGIHARA, Toshihide, Tokyo 100-8310 (JP); KATO, Aiichiro, Tokyo 100-8310 (JP)
(74) Representative: Pfenning, Meinig & Partner GbR
(86) International application number: PCT/JP2010/050918
(87) International publication number: WO 2011/089728

(57) **Abstract**

A ventilation terminal device 1 of the present invention includes: a body 30 formed with an outside air inlet opening 27 which draws in outside air outside a building, an outside air outlet opening 11 which directly blows out outside air into a room in a building, a first indoor air inlet opening 12 which directly draws in indoor air from the inside of the room, and an indoor air discharge opening 18 which discharges the indoor air; a supply air passageway 25 which is formed in the body to connect the outside air inlet opening and the outside air outlet opening; an exhaust air passageway 24 which is formed in the body to connect the indoor air inlet opening and the indoor air discharge opening; and a heat exchanger 10 which is accommodated in the inside of the body to cause heat exchange to be performed between outside air passing through the supply air passageway and indoor air passing through the exhaust air passageway, wherein the indoor air discharge opening is caused to communicate with a return duct 3 which extends to the inside of the room from an exhaust fan provided separately from the body.

## Description

### Field

The present invention relates to a ventilation terminal device for ventilation within a building, and particularly, to a ventilation terminal device which performs heat exchange ventilation.

### Background

Conventionally, ventilation systems which perform ventilation for each room within a building include a class 3 ventilation system, a class 1 ventilation system, and the like. Herein, ventilation systems categorized as class 1, class 2, and class 3 as systems of ventilation will be described. The class 1 ventilation system is a ventilation system which performs supply of air through mechanical ventilation and performs exhaust of air also through mechanical ventilation. The class 2 ventilation system is a ventilation system which performs supply of air through mechanical ventilation and performs exhaust of air through natural ventilation. The class 3 is a ventilation system which performs supply of air through natural ventilation and performs exhaust of air through mechanical ventilation.

Since the class 1 ventilation system performs both supply and exhaust of air through mechanical ventilation, it is easy to perform designed ventilation. Also, heat exchange ventilation systems mounted with a heat exchange element which performs heat exchange between supply air and exhaust air are extensively used. Hereinafter, a ventilation system which does not perform heat exchange is also referred to as a non-heat exchange ventilation system. The class 2 ventilation system performs supply of air through mechanical ventilation and performs exhaust of air through natural ventilation. Since it becomes positive pressure within a room and indoor air blows outside from a gap in a building or the like, the class 2 ventilation system is used as a ventilation system for a room such as a cleanroom where it is not preferable to have outside air coming indoors directly.

The class 3 ventilation system performs exhaust of air through mechanical ventilation and performs supply of air through natural ventilation. Since it becomes negative pressure within a room and outside air comes indoors from a gap in a building or the like, the class 3 ventilation system is used as a ventilation system for a room such as, for example, a bathroom which is a contaminated zone where it is not preferable to have air leaking into a room adjacent thereto or the like.

For example, Patent Literature 1 discloses a class 3 non-heat exchange ventilation system which exhausts indoor air from an exhaust grille provided to a room by use of a fan provided above a ceiling and supplies outside air naturally from a natural air supply opening provided in the room.

Also, for example, Patent Literature 2 discloses a class 1 heat exchange ventilation system in which a heat exchange ventilation device integrally including a heat exchanger, an air supply fan and an air exhaust fan is connected with an air supply hood and an air exhaust hood provided on an outer wall, and an air exhaust grille and an air supply grille provided on a room by ductwork to perform heat exchange.

### Citation List

### Patent Literature

Patent Literature 1: Japanese Patent Application Laid-open No. 2003-97840
Patent Literature 2: Japanese Patent Application Laid-open No. 2005-69619

### Summary

### Technical Problem

However, in the case of the class 3 non-heat exchange ventilation system disclosed in Patent Literature 1, there is a problem that loss in air conditioning energy occurs, since cooled or heated indoor air is exhausted as is. Also, since outside air supplied from the supply grille is supplied at an outside temperature, there is a problem that a resident feels a sense of uncomfortable cold wind during the winter season.

On the other hand, with the class 1 heat exchange ventilation system disclosed in Patent Literature 2, loss in air conditioning energy and a sense of cold wind felt by a resident can be reduced, since heat exchange is performed between indoor air and outside air. However, in a case where a class 3 ventilation system is used in an existing building, there is a problem that changing to a heat exchange ventilation system is difficult, since work for replacing an existing ventilation device installed in a ceiling space with a ventilation device disclosed in Patent Literature 2 or construction of a duct pipe for supply of air becomes necessary.

The present invention has been made in view of the above-mentioned circumstances and has an object that is to obtain a ventilation terminal device with which an existing non-heat exchange ventilation system can be changed easily to a heat exchange ventilation system. Solution to Problem

In order to solve the above-described problem and achieve the object, the present invention provides a ventilation terminal device comprising: a body formed with an outside air inlet opening which draws in outside air outside a building, an outside air outlet opening which directly blows out the outside air into a room in a building, a first indoor air inlet opening which directly draws in indoor air from the inside of the room, and an indoor air discharge opening which discharges the indoor air; a supply air passageway which is formed in the body to connect the outside air inlet opening and the outside air outlet opening; an exhaust air passageway which is formed in the body to connect the indoor air inlet opening and the indoor air discharge opening; and a heat exchanger which is accommodated in the inside of the body to cause heat exchange to be performed between outside air passing through the supply air passageway and indoor air passing through the exhaust air passageway, wherein the indoor air discharge opening is caused to communicate with a return duct which extends to the inside of the room from an exhaust fan provided separately from the body. Advantageous Effects of Invention

The ventilation terminal device according to the present invention has an advantageous effect that an existing non-heat exchange ventilation system can be changed easily to a heat exchange ventilation system by causing an indoor air discharge opening to communicate with a return duct which extends from an existing exhaust fan toward the inside of a room.

### Brief Description of Drawings

FIG. 1 is a view showing the outline of an overall configuration of a ventilation system according to a first embodiment of the present invention.
FIG. 2 is a lateral cross-sectional view representing the structure of a ventilation terminal device.
FIG. 3 is a perspective view showing a state where the ventilation terminal device is attached to an outer wall.
FIG. 4 is a lateral cross-sectional view representing the structure of a ventilation terminal device according to a second embodiment of the present invention.
FIG. 5 is a lateral cross-sectional view representing the structure of a ventilation terminal device according to a third embodiment of the present invention.

### Description of Embodiments

Hereinafter, embodiments of a ventilation system including a ventilation terminal device according to the present invention will be described in detail based on the drawings. Note that the present invention is not limited to these embodiments.

### First Embodiment

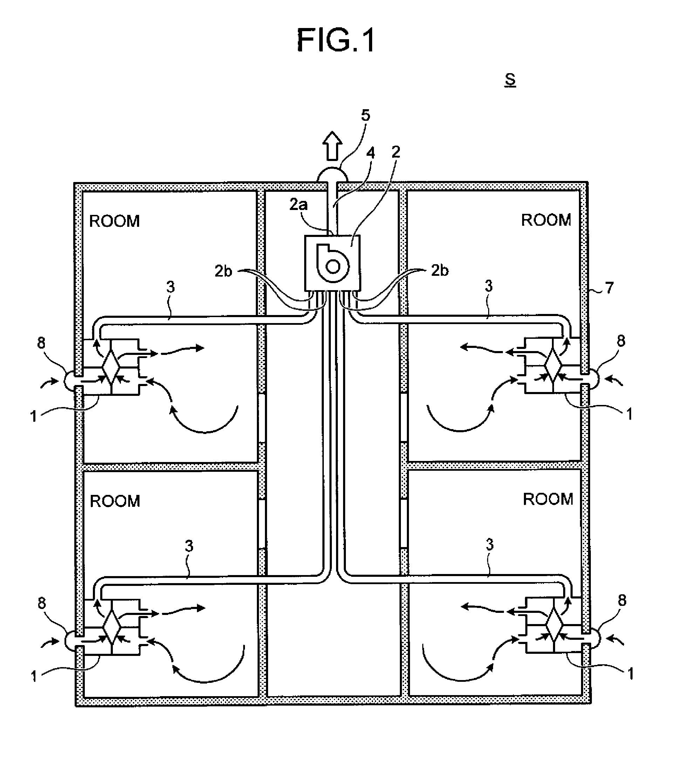

FIG. 1 is a view showing the outline of an overall configuration of a ventilation system according to a first embodiment of the present invention. A ventilation system S forms a class 3 concentrated exhaust ventilation system within a building. Within the building, a plurality of rooms are provided. The ventilation system S includes an exhaust fan 2 and a ventilation terminal device 1. The exhaust fan 2 is installed in a ceiling space of a corridor or the like inside the building. The exhaust fan 2 is formed with an outlet opening 2a and inlet openings 2b. The exhaust fan 2 generates an air current directed toward the outlet opening 2a from the inlet openings 2b. To the outlet opening 2a of the exhaust fan 2, an exhaust duct 4 for exhausting indoor air outside the building is connected. To the inlet openings 2b of the exhaust fan 2, return ducts 3 which extend toward the interiors of the plurality of rooms are connected. The ventilation terminal device 1 is installed at a terminal section of the return duct 3 in each room.

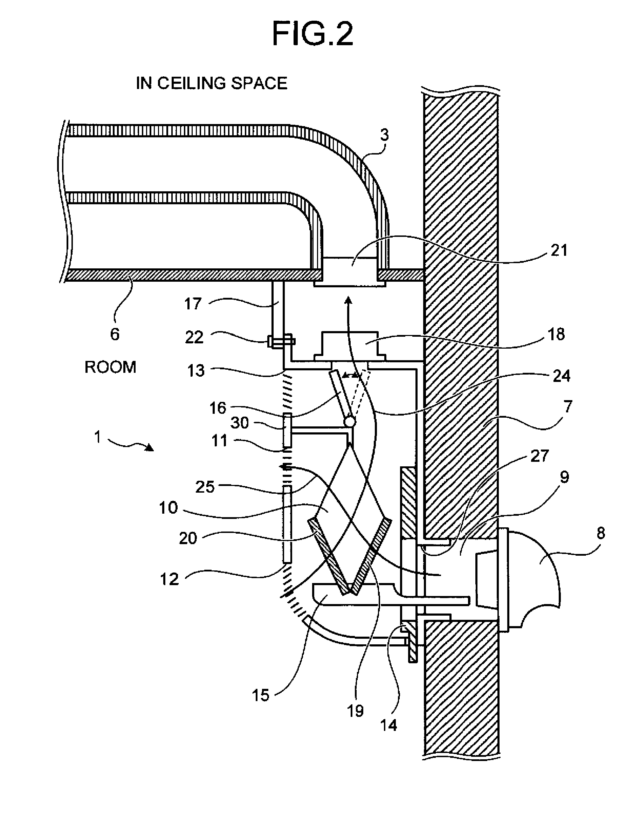

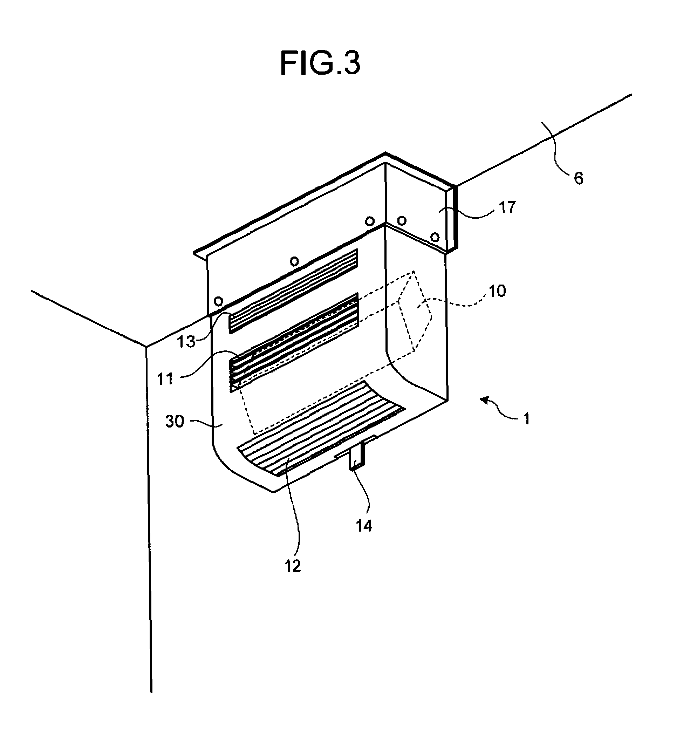

FIG. 2 is a cross-sectional view representing the structure of the ventilation terminal device 1. FIG. 3 is a perspective view showing a state where the ventilation terminal device 1 is attached to an outer wall (indoor wall surface) 7. The ventilation terminal device 1 includes a body 30 formed with an indoor outlet opening (outside air outlet opening) 11, a first indoor inlet opening (first indoor air inlet opening) 12, a second indoor inlet opening (second indoor air inlet opening) 13, a duct connection opening (indoor air discharge opening) 18, and an outside air inlet opening 27. Inside the body 30, a heat exchange element (heat exchanger) 10 is accommodated. The heat exchange element 10 is formed with a primary air passageway and a secondary air passageway independent from each other, such that heat exchange is performed between air passing through the primary air passageway and air passing through the secondary air passageway. Note that a detailed description of the primary air passageway and the secondary air passageway is omitted. Due to the heat exchange element 10 being accommodated inside the body 30, an air passageway (supply air passageway 25) connecting from the outside air inlet opening 27 to the indoor outlet opening 11 is formed inside the body 30. Also, an air passageway (exhaust air passageway 24) connecting from the first indoor inlet opening 12 to the duct connection opening 18 is formed inside the body 30.

The exhaust air passageway 24 diverges in the downstream of the heat exchange element 10 toward the second indoor inlet opening 13. At its diverging portion, a bypass damper 16 is provided. By switching the position of the bypass damper 16, it is possible to select one of a state where the duct connection opening 18 and the first indoor inlet opening 12 are caused to communicate with each other and a state where the duct connection opening 18 and the second indoor inlet opening 13 are caused to communicate with each other, within the ventilation terminal device 1.

In the outer wall 7 of the building, a ventilation opening 9 which provides communication between the inside of the building and the outside of the building is formed. The outside air inlet opening 27 of the ventilation terminal device 1 is directly connected to the ventilation opening 9. Accordingly, outside air passes through the supply air passageway 25 to supply air to the room from the indoor outlet opening 11. Also, since the outside air inlet opening 27 is directly connected to the ventilation opening 9, a duct pipe on the supply side is omitted. Accordingly, trouble and cost for duct pipe construction can be reduced.

Also, since a duct pipe on the exhaust side is a duct pipe for air being discharged outside, dirt within the duct pipe hardly causes a problem. On the other hand, since the duct pipe on the supply side is a duct pipe for supplying fresh outside air to the room, dirt within a duct causes a problem that the dirt is mixed with the fresh outside air and supplied to within the room. Also, it causes a problem of extra trouble and cost for maintenance for performing cleaning the inside of the duct pipe on the supply side. Since the duct pipe on the supply side is omitted in the first embodiment, the problem of dirt within the duct pipe on the supply side can be solved.

Also, a conventional heat exchange ventilation system has required two fans, that is, an exhaust fan and a supply fan. However, in the present invention, heat exchange ventilation is performed with only the exhaust fan by utilizing the airtightness of the building, and a supply fan can be omitted.

The duct connection opening 18 of the ventilation terminal device 1 is allowed to communicate with a return duct connection member 21 on a ceiling 6 to which the return duct 3 is connected. In the first embodiment, a facing panel 17 is used for communication between the duct connection opening 18 and the return duct connection member 21. Since the ventilation opening 9 may be formed at various heights depending on the building or the ventilation opening 9, a distance between the ventilation terminal device 1 and the ceiling 6 also varies when the ventilation terminal device 1 is attached to the outer wall 7 and the outside air inlet opening 27 and the ventilation opening 9 are connected. Thus, there are cases where it is difficult to directly connect the duct connection opening 18 of the ventilation terminal device and the return duct connection member 21 provided on the ceiling 6. Therefore, the panel 17 for coverage between the surface of the ceiling 6 and the ventilation terminal device 1 is attached. Also, a seal is applied so that airtightness is maintained between the panel 17 and the ceiling 6. Also, a seal is applied so that airtightness is maintained between the panel 17 and the ventilation terminal device 1. With the panel 17 covering between the surface of the ceiling 6 and the ventilation terminal device 1 in this manner, the duct connection opening 18 and the return duct connection member 21 can be allowed to communicate with each other. The panel 17 is secured to a panel attachment section 22 of the ventilation terminal device 1 with a screw.

Since the duct connection opening 18 and the return duct connection member 21 are allowed to communicate with each other using the panel 17, adjustment can be made easily even in a case where there is restriction to the attachment position of the ventilation terminal device 1. For example, even in a case where there is restriction that the attachment position of the ventilation terminal device 1 has to be low in order for a supply hood 8 to be provided away from eaves provided on the outside of the outer wall 7, the duct connection opening 18 and the return duct connection member 21 can easily be caused to communicate with each other by use of the panel 17 according to the distance between the ventilation terminal device 1 and the surface of the ceiling 6. That is, the degree of freedom in the installation position of the ventilation terminal device 1 can be increased. Also, since construction of a duct pipe between the duct connection opening 18 and the return duct connection member 21 becomes unnecessary, trouble and cost for duct pipe construction can be reduced.

When the exhaust fan 2 is operated, an air flow along the exhaust air passageway 24 is formed. Accordingly, indoor air directly drawn in from the room via the first indoor inlet opening 12 passes through an exhaust filter 20 and the heat exchange element 10, and further passes through the return duct connection member 21, the return duct 3, and an exhaust duct 4 to be exhausted outside the building from an exhaust hood 5.

Also, it becomes negative pressure within the room due to indoor air being exhausted, and an air flow along the supply air passageway 25 is formed. Accordingly, outside air is drawn in from the supply hood 8, passes through the ventilation opening 9, passes through a supply filter 19 and the heat exchange element 10, and is directly blown out to be supplied to the room from the indoor outlet opening 11.

In the heat exchange element 10, heat exchange is performed between outside air and indoor air. For example, heat of indoor air is transferred to supply air, so that ventilation is realized while heat is exchanged. By performing ventilation with heat exchange in this manner, energy of cooled or heated air within the room can be prevented from being lost in the ventilation, and energy can be saved.

Also, since the heat exchange element 10 is provided on the ventilation terminal device 1 side, even an existing ventilation system which performs a class 3 ventilation without performing heat exchange can become a ventilation system which performs heat exchange between indoor air and outside air merely by providing the ventilation terminal device 1 on the end side of the return duct 3. Also, since the ventilation terminal device 1 is provided not in the ceiling space but in the room even in a case where the ventilation terminal device 1 is to be provided at the end of the existing return duct 3, work within the ceiling space can be reduced to improve workability. Particularly in the case where an exhaust grille is provided on a ceiling surface for an existing ventilation system, attaching the return duct connection member 21 as shown in FIG. 2 in place of the exhaust grille suffices, thereby making work for changing the ventilation system even easier. Also, since the ventilation terminal device 1 is provided in the room, the heat exchange ventilation system can be achieved easily even in a case where sufficient space for disposing a conventional heat exchange ventilation device can not be reserved in the ceiling space.

The ventilation terminal device 1 is equipped with a shutter 14 capable of being opened or closed, so that the outside air inlet opening 27 can be closed in a shutdown time, when it is desired to stop supply of outside air, or in the situation like that. Supply of air is performed by opening the shutter 14 when the exhaust fan 2 is in operation. Also, by closing the shutter 14, it is possible to stop supply of outside air when the exhaust fan 2 is in operation and prevent outside air from coming in when the exhaust fan 2 is shut down. In the first embodiment, the outside air inlet opening 27 can be opened or closed by sliding the shutter 14 to the left or right (alternatively, up or down). By the shutter 14 being equipped in this manner, outside air can be prevented from coming in due to snowstorm, typhoon or the like. Also, when a difference between an outside temperature and a temperature within the room is relatively-large, decrease in cooling or heating efficiency can be prevented with outside air being prevented from coming in.

Also, since it becomes possible to select between non-heat exchange ventilation and heat exchange ventilation and to select between ventilation in which supply and exhaust of air are performed and ventilation with only exhaust of air with the ventilation terminal device 1 at each room by virtue of the combination of the above-mentioned bypass damper 16 and the shutter 14, a ventilation system which can adapt to the thermal requirement for each room can be provided. Since a conventional class 1 heat exchange ventilation system is intended to realize heat exchange ventilation of an entire residence, it has been difficult to build a ventilation system that can select between heat exchange and non-heat exchange or between supply and exhaust of air and only exhaust of air for each room. The present invention can provide an individually-controlled heat exchange ventilation system that causes a room on the north side to be under negative pressure so that air on the south side easily flows to the north side or acts as something like that by performing heat exchange ventilation for an air-conditioned room on the south side and applying non-heat exchange ventilation with only exhaust of air to a non-air-conditioned room on the north side during the winter season, for example.

Also, only part of a terminal grille in each room under the class 3 concentrated exhaust ventilation system can be used for the ventilation terminal device 1 of the present invention, and the invention can provide a ventilation system that performs heat exchange ventilation only for any selected one(s) of the plurality of rooms. Obviously, it may be a ventilation system that performs heat exchange ventilation only for one room.

During the winter season, drainage (condensation water) is generated on the exhaust side of the heat exchange element 10 for the reason that indoor air warmed by heating and cold outside air pass through the heat exchange element 10. Inside the ventilation terminal device 1, a drain pan 15 for receiving generated drainage is provided below the heat exchange element 10. The drain pan 15 has a shape whose discharge section that forms its edge protrudes outside the body 30 from the outside air inlet opening 27 and protrudes to the ventilation opening 9, so that the generated drainage can be discharged outside. Accordingly, the drainage generated in the heat exchange element 10 can be discharged outside without leakage indoors. Also, due to the edge of the drain pan 15 protruding to the ventilation opening 9, there is an advantageous effect that trouble and cost of performing construction of a drain pipe separately can be saved.

During the middle season such as the spring season or the autumn season, ventilation is possible without performing heat exchange between indoor air and outside air by switching the bypass damper 16 so that the duct connection opening 18 and the second indoor inlet opening 12 are caused to communicate with each other, whereby indoor air is exhausted without involving the heat exchange element 10. By providing the bypass damper 16 in this manner, presence or absence of heat exchange can be selected, and loss of energy of cooled or heated indoor air due to ventilation can be reduced to save energy during the cooling or heating season in the summer or winter. During the middle season, pressure loss is reduced and air volume for ventilation can be increased by exhausting air without involving the heat exchange element 10. Also, even in a case where air volume for ventilation is not increased, power consumption can be reduced, and energy can be saved. Also, exhaust of air without involving the heat exchange element 10 enables hot air within the room to be vented.

Note that, although the first embodiment gives an example of concentrated ventilation for a building including a plurality of rooms in which the rooms are ventilated collectively, the invention is not limited thereto. The ventilation system described in the first embodiment may be applied to a building including only one room, or the ventilation system described in the first embodiment may be applied to each of a plurality of rooms.

### Second Embodiment

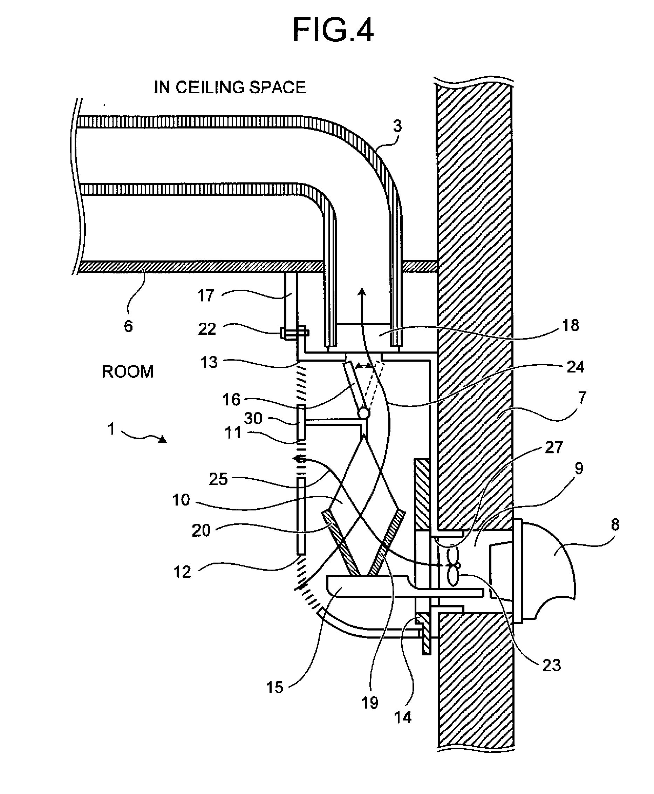

FIG. 4 is a lateral cross-sectional view representing the structure of the ventilation terminal device 1 according to a second embodiment of the present invention. For the same configurations as in the embodiment described above, the same reference signs are used while detailed descriptions thereof are omitted. In the second embodiment, the return duct 3 is formed to protrude from the ceiling surface to the room side, and the duct connection opening 18 provided in the ventilation terminal device 1 and the return duct 3 are directly connected to each other. Accordingly, the panel 17 does not form a part of an air passageway and functions as a cover for the return duct 3. Thus, it becomes unnecessary to maintain airtightness between the ceiling 6 and the ventilation terminal device 1, and the trouble of sealing a gap thereof can be saved.

Also, in the second embodiment, a supply fan 23 is provided on a path of supplied outside air, for example, in the outside air inlet opening 27. In this way, the ventilation system S supplies air forcefully by use of the supply fan 23, and therefore serves as a class 1 ventilation system. Note that a position in which the supply fan 23 is provided only needs to be on the path of supplied outside air and may also be set near the indoor outlet opening 11, for example. By providing the fan in this manner, a more designed supply of air can be performed than a natural supply of air with a class 3 ventilation.

Also, since the heat exchange element 10 is provided on the ventilation terminal device 1 side, even an existing ventilation system which performs a class 3 ventilation without performing heat exchange can become a ventilation system which performs heat exchange between indoor air and outside air merely by providing the ventilation terminal device 1 on the end side of the return duct 3. Also, since the ventilation terminal device 1 is provided on in the ceiling space but in the room even in a case where the ventilation terminal device 1 is to be provided on the end of the existing return duct 3, work in the ceiling space can be reduced to improve workability. Also, since the ventilation terminal device 1 is provided in the room, the ventilation system which performs heat exchange can be achieved easily even in a case where sufficient space can not be reserved in the ceiling space. Also, since the duct connection opening 18 and the return duct 3 are directly connected to each other in the second embodiment, the return duct 3 and the ventilation terminal device 1 can be connected more reliably with the trouble of airtight construction of the panel 17 being saved. For example, in a case where it is easy to have the return duct 3 protruded in advance from the ceiling surface to the room side so as to make pipe installation, such as a case where a building is newly constructed, the duct connection opening 18 becomes easy to directly connect to the return duct 3. Note that, in a case where an inlet opening which draws in indoor air is formed on the ceiling surface for an existing ventilation system, the inlet opening and the duct connection opening may be connected by a separate duct pipe so that airtight construction of the panel 17 is unnecessary.

### Third Embodiment

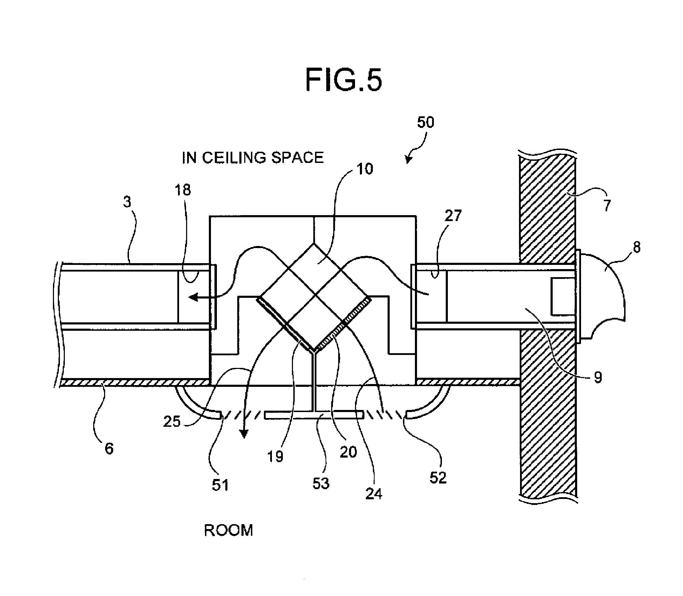

FIG. 5 is a lateral cross-sectional view representing the structure of the ventilation terminal device 1 according to a third embodiment of the present invention. For the same configurations as in the embodiments described above, the same reference signs are assigned, and detailed descriptions thereof are omitted. In the third embodiment, a ventilation terminal device 50 is installed in the ceiling space.

The ventilation opening 9 of the outer wall 7 is also formed not on the room side but on the side in the ceiling space. The ventilation terminal device 50 is disposed near the ventilation opening 9, and the outside air inlet opening 27 and the ventilation opening 9 are connected by a duct pipe. Since the ventilation terminal device 50 is disposed near the ventilation opening 9, the duct pipe on the supply side can be shortened. Accordingly, the problem of dirt within the duct pipe on the supply side as described in the first embodiment is less likely to occur. Note that the outside air inlet opening 27 and the ventilation opening 9 may also be connected to each other directly.

The duct connection opening 18 of the ventilation terminal device 50 is connected to the return duct 3 in the ceiling space. An indoor outlet opening 51 and an indoor inlet opening 52 are formed in an exposed panel 53 which is exposed the exterior on the ceiling surface. When the exhaust fan 2 shown in FIG. 1 is operated, an air flow along the exhaust air passageway 24 is formed. Accordingly, indoor air drawn in from the indoor inlet opening 52 passes through the exhaust filter 20 and the heat exchange element 10, and further passes through the return duct 3 and the exhaust duct 4 to be exhausted outside the building from the exhaust hood 5.

Also, it becomes negative pressure in the room due to the indoor air being exhausted, and an air flow along the supply air passageway 25 is formed. Thereby, outside air is drawn in from the supply hood 8, passes through the ventilation opening 9, passes through the supply filter 19 and the heat exchange element 10, and is supplied to the room from the indoor outlet opening 51. In the heat exchange element 10, ventilation is performed while heat exchange is performed between indoor air and outside air.

Through ventilation with heat exchange in this manner, energy of air cooled or heated in the room can be restrained from being lost due to the ventilation, and energy can be saved. Also, since the ventilation terminal device 50 is installed within the ceiling space and the exposed panel 53 is exposed on the ceiling surface, the device itself is not exposed in the room as with the ventilation terminal device 1 described in the first and second embodiments, thus improving the design and also becoming less likely to block the path of a resident.

### Industrial Applicability

As described above, the ventilation terminal device according to the present invention is useful for a ventilation system which causes heat exchange to be performed between indoor air and outside air.

### Reference Signs List

- S: VENTILATION SYSTEM
- 1: VENTILATION TERMINAL DEVICE
- 2: EXHAUST FAN
- 2a: OUTLET OPENING
- 2b: INLET OPENING
- 3: RETURN DUCT
- 4: EXHAUST DUCT
- 5: EXHAUST HOOD
- 6: CEILING
- 7: OUTER WALL
- 8: SUPPLY HOOD
- 9: VENTILATION OPENING
- 10: HEAT EXCHANGE ELEMENT (HEAT EXCHANGER)
- 11: INDOOR OUTLET OPENING (OUTSIDE AIR OUTLET OPENING)
- 12: FIRST INDOOR INLET OPENING (FIRST INDOOR AIR INLET OPENING)
- 13: SECOND INDOOR INLET OPENING (SECOND INDOOR AIR INLET OPENING)
- 14: SHUTTER
- 15: DRAIN PAN
- 16: BYPASS DAMPER
- 17: PANEL
- 18: DUCT CONNECTION OPENING (INDOOR AIR DISCHARGE OPENING)
- 19: SUPPLY FILTER
- 20: EXHAUST FILTER
- 21: RETURN DUCT CONNECTION MEMBER
- 22: PANEL ATTACHMENT SECTION
- 23: SUPPLY FAN
- 24: EXHAUST AIR PASSAGEWAY
- 25: SUPPLY AIR PASSAGEWAY
- 27: OUTSIDE AIR INLET OPENING
- 30: BODY
- 50: VENTILATION TERMINAL DEVICE
- 51: INDOOR OUTLET OPENING
- 52: INDOOR INLET OPENING
- 53: EXPOSED PANEL

## Claims

1. A ventilation terminal device comprising:
a body formed with an outside air inlet opening which draws in outside air outside a building, an outside air outlet opening which directly blows out the outside air into a room in a building, a first indoor air inlet opening which directly draws in indoor air from the inside of the room, and an indoor air discharge opening which discharges the indoor air;
a supply air passageway which is formed in the body to connect the outside air inlet opening and the outside air outlet opening;
an exhaust air passageway which is formed in the body to connect the indoor air inlet opening and the indoor air discharge opening; and
a heat exchanger which is accommodated in the inside of the body to cause heat exchange to be performed between outside air passing through the supply air passageway and indoor air passing through the exhaust air passageway, wherein
the indoor air discharge opening is caused to communicate with a return duct which extends to the inside of the room from an exhaust fan provided separately from the body.

2. The ventilation terminal device according to claim 1, wherein
the body is attached to an indoor wall surface where a ventilation opening which provides communication between the inside of the room and the outside of the building is formed, and
the outside air inlet opening is connected to the opening.

3. The ventilation terminal device according to claim 1, further comprising a shutter which opens and closes the outside air inlet opening.

4. The ventilation terminal device according to claim 1, further comprising a drain pan which receives drainage generated inside the body, wherein
the drain pan is formed with a discharge section for the drainage which protrudes outside the body from the outside air inlet opening.

5. The ventilation terminal device according to claim 1, wherein the body is formed with a second indoor air inlet opening for directly drawing in indoor air, and
the ventilation terminal device further comprises:
a bypass air passageway which is formed in the body and directed toward the second indoor air inlet opening from the exhaust air passageway on a downstream side of the heat exchanger; and
a switch damper for switching between a state where the first indoor air inlet opening and the indoor air discharge opening are caused to communicate with each other and a state where the second indoor air inlet opening and the indoor air discharge opening are caused to communicate with each other.

6. The ventilation terminal device according to claim 1, further comprising a panel which covers a space between an end of the return duct on a side of the inside of the room and the indoor air discharge opening.

7. The ventilation terminal device according to claim 1, further comprising a supply filter which is provided in the supply air passageway to remove dust or gas contained in outside air.

8. The ventilation terminal device according to claim 1, further comprising an exhaust filter which is provided in the exhaust air passageway to remove dust or gas contained in indoor air.

9. The ventilation terminal device according to claim 1, further comprising a supply fan which is provided in the supply air passageway to generate an air current directed toward the outside air outlet opening from the outside air inlet opening.

10. A ventilation system comprising:
the ventilation terminal device according to claim 1;
the exhaust fan; and
the return duct.

11. The ventilation system according to claim 10, wherein
a ventilation opening which provides communication between the inside of the room and the outside of the building is formed in a wall surface of the room, and
the body is attached to an indoor wall surface formed with the ventilation opening, such that the outside air inlet opening and the ventilation opening are connected.
